# EUROPÄISCHE PATENTSCHRIFT

(11) **EP 3 037 600 B1**
(45) Veröffentlichungstag und Bekanntmachung des Hinweises auf die Patenterteilung: **04.07.2018**
(21) Anmeldenummer: 15199987.7
(22) Anmeldetag: 15.12.2015
(51) Int. Cl.: E04C 2/34, B27L 5/02, B27D 1/06, B32B 3/12, E04C 2/36, B32B 7/00, B32B 7/04, B32B 7/12, B32B 21/13, B32B 21/14, B32B 3/28, E04C 2/24

(54) **VERFAHREN ZUM HERSTELLEN EINES HOLZBAUMATERIALS**
METHOD FOR MANUFACTURING WOODEN CONSTRUCTION MATERIALS
PROCÉDÉ DE FABRICATION DE MATÉRIAUX DE CONSTRUCTION EN BOIS

(30) Priorität: 23.12.2014 AT 509412014
(43) Veröffentlichungstag der Anmeldung: 29.06.2016
(73) Patentinhaber: Schweitzer, Johann, 4076 St. Marienkirchen a.d. Polsenz (AT)
(72) Erfinder: Schweitzer, Johann, 4076 St. Marienkirchen a.d. Polsenz (AT)
(74) Vertreter: Patentanwaltskanzlei Hübscher

(56) Entgegenhaltungen:
- EP-A1- 2 660 408
- WO-A1-99/63180
- WO-A1-2005/105426
- FR-A- 1 093 518
- GB-A- 560 912
- JP-A- H0 615 612
- US-A- 63 128
- US-A- 1 772 726
- US-A- 4 428 993
- US-B1- 6 298 888

## Beschreibung

Die Erfindung bezieht sich auf ein Verfahren zum Herstellen eines Holzbaumaterials, insbesondere von Hohlkammerplatten, aus zueinander beabstandeten Holzlagen (2, 3) und einem dazwischen eingesetzten Holzkern (4) aus Wellfurnier (5), wobei das Wellfurnier mit einem Schälmesser mit Wellenschliff und mit einem Gegendruckmesser mit Wellenschliff von einem um die eigene Achse rotierenden Stamm als Wellfurnier abgeschält wird sowie auf eines daraus gefertigten Holzbaumaterials.

Als Furnier werden 0,3 bis 6 mm dicke Blätter aus Holz bezeichnet, die durch verschiedene Säge- und Schneideverfahren vom Stamm abgetrennt werden. Im vorliegenden Fall soll insbesondere Schälfurnier zum Einsatz kommen, das insbesondere durch Schälen von gedämpftem Rundholz von einem um seine Achse rotierendem Stamm geschält wird. Abschneiden von Wellfurnier ist aus der JP H0615612 A bekannt, wobei dazu eine rasiermesserartige Schneidfolie verwendet wird, die zwischen zwei miteinander verschraubten Klemmelementen geklemmt wird. Die Klemmelemente bilden die in Schneidenlängsrichtung gewellte Aufnahme für die Schneidfolie aus und übertragen das Wellenprofil auf diese bei der Klemmung. Allerdings hat sich herausgestellt, dass mit derartigen Vorrichtungen nicht die gewünschten Wellfurnier von einem sich drehenden Holzstamm abgeschnitten werden können, da das Furnier wegen der konstruktionsbedingten großen Messerdicke in kurzen Segmenten abbrechen würde und nicht die erforderliche Konstanz hinsichtlich der Wellfurnierdicke gewährleistet werden kann. Ein Verfahren zum Herstellen von Wellfurnier mit einem Schälmesser mit Wellenschliff und mit einem Gegendruckmesser mit Wellenschliff zum Abschälen des Furniersvon einem um die eigene Achse rotierenden Stamm als Wellfurnier ist aus der US 1 772 726 A bekannt.

Hohlkammerelemente aus zueinander in Abstandsrichtung beabstandeten Plattenelementen mit einer dazwischenliegenden Abstandsstruktur sind beispielsweise auch aus der DE 102009001245 A1 bekannt. Die Abstandsstruktur besteht dabei aus zueinander in Spannrichtung beabstandeten Spannrahmenelementen und einer dazwischen aufgespannten wabenartigen Struktur, wobei die wabenartige Struktur aus mehreren Schichten von partiell miteinander verbundenen Mittellagen aus Holz gebildet ist. Die Faserrichtung der Mittellagen aus Holz ist dabei stets parallel zu den Spannrahmenelementen und senkrecht zur Spannrichtung. Mit dieser Technik können Hohlkammerelemente aus Holz für den Möbelinnenausbau für Zwischenwände, für Doppelböden, für Bauelemente, wie beispielsweise Türen od. dgl., eingesetzt werden. Es muss stets ein Außenrahmen vorgesehen werden, in den die Innenelemente eingesetzt werden, da die Wabenkernstruktur vor dem Plattenverleimen keine genaue Positionierung erlaubt und keine genaue Maßhaltigkeit gewährleistet ist.

Weitere Hohlkammerelemente offenbart die GB 560 913 A, wobei wenigstens eine Lage wellenförmigen Holzes zwischen zueinander beabstandeten ebenen Holzlagen angeordnet ist. Das wellenförmige Holz wird aus Vollholzbrettern geschnitten oder gefräst, um das Gewicht dieses Holzbaumaterials zu verringern. Dies bedeutet aber einen erheblichen Verschnitt in der Fertigung, also erhöhten Materialaufwand und eine erhöhte Menge an Spanabfall.

Sperrholz mit einem Kern aus gewelltem Furnier offenbaren die DE 670 799 und die WO 2005/105426 A1. Zur Herstellung von Mittellagen für Sperrholz aus belegtem Wellfurnier wird das frisch geschälte Furnier beidseitig mit Papierbahnen hinterklebt und gleichzeitig mit einer Wellvorrichtung gewellt und getrocknet, wonach sie mit Deckfurnieren zu einem Block verleimt werden. Eben dieser Formgebungs und Trocknungsprozess ist aufwändig. Wegen der Faserausrichtung parallel zu den Wellenrücken ergeben sich beim Verleimen und Verpressen des Holzkerns mit den Holzlagen Riffelverformungen auf Grund abweichender Radien benachbarter Wellen, womit gewünschte Genauigkeiten nicht erzielt werden können und wegen der nicht konstanten Wellenform auch keine definierten mechanischen Eigenschaften vorliegen. Die DE 102008022805 A1 zeigt Mittellagen für ein Holzbaumaterial aus mehreren miteinander verklebten und gewellten Lagen aus Furnier. Weitere Hohlkammerelemente sind beispielsweise aus der US 4 428 993 A und der EP 2 660 408 A1 bekannt.

Ausgehend von einem Stand der Technik der vorgeschilderten Art liegt der Erfindung die Aufgabe zugrunde, ein Verfahren zum Herstellen von Wellfurnier und von daraus gefertigtem Holzbaumaterial anzugeben, das eine hohe Formhaltigkeit bei verbesserten Festigkeitseigenschaften durch hohe Furnierdickenkonstanz aufweist und vorzugsweise mechanisch hochbelastbar ist.

Die Erfindung löst die gestellte Aufgabe dadurch, dass die Amplitude der Wellfurnierwelle kleiner als die halbe Furnierstärke ist, und dass das Wellfurnier in weiterer Folge in der gewellten Form getrocknet wird, dass mehrere Lagen Wellfurnier zu Platten verleimt werden, wobei die Wellen benachbarter Lagen unterschiedlich ausgerichtet werden, wonach von den Platten Holzkernelemente gesägt werden, die eine dem Abstand der Holzlagen entsprechende Breite aufweisen, wonach die Holzkernelemente zum Holzkern zusammengeschichtet und mit den Holzlagen zum Holzbaumaterial zusammengesetzt werden.

Das Abschneiden der Furniere von dem rotierenden Stamm erfolgt mit einem Schälmesser mit Wellenschliff und mit einem Gegendruckmesser mit ebenfalls einem Wellenschliff, wobei die Wellenschliffe von Messer und Gegendruckmesser hinsichtlich der Wellenlänge übereinstimmen. Die Messer sind dabei derart geschliffen, dass das Furnier bereits in der gewünschten gewellten Form, hinsichtlich Wellenlänge, Amplitude und Furnierdicke, vom Stamm abgeschnitten wird. Das Gegendruckmesser ist um 180° gedreht an den Stamm angestellt, drückt also mit seiner Hauptfreifläche gegen den Stamm und gleitet die Stammoberfläche entlang, ohne Holz vom Stamm abzuschneiden, und begrenzt damit die Schnitttiefe des Schälmessers. Das Gegendruckmesser sorgt damit für einen Gegendruck auf das Holz, der dafür sorgt, dass das abgeschnittenen Wellfurnier eine hohe Formhaltigkeit und gute Festigkeitseigenschaften wegen der damit erzielbaren Furnierdickenkonstanz aufweist. Das Abgeschälte Furnier wird zwischen Schälmessers und Gegendruckmesser geführt. Beim Schälmesser ist das Wellprofil in die Spanfläche eingearbeitet und bestimmt somit die quer zur Schnittrichtung gewellte Hauptschneide. Beim Gegendruckmesser ist das Wellprofil in die Hauptfreifläche eingearbeitet. Der Spitze-Tal-Wert der Wellung des Gegendruckmessers ist dabei größer zu wählen, üblicherweise um 0,3 bis 0,7mm, insbesondere um 0,5mm, als der Spitze-Tal-Wert der Wellung des Schälmessers. Damit lässt sich die erforderliche Furnierdickenkonstanz über den Furnierquerschnitt erzielen und lassen sich Mikrorisse im Furnier vermeiden.

Zur Gewährleistung einer guten mechanischen Festigkeit des Holzkerns ist die Amplitude der Wellfurnierwelle kleiner als die halbe Furnierstärke ist. Dies bedeutet, dass stets Fasern über das Wellfurnier durchgehend verlaufen, also nicht abgeschält werden, was der Festigkeit der Wellfurnierbahn sehr zuträglich ist und in weiterer Folge auch wesentlich für die Maßhaltigkeit verantwortlich ist. Bei einer Furnierstärke ergibt sich bei vorgegebener Amplitude eine Dicke der gesamten Wellfurnierlage, die sich aus der Furnierstärke plus der doppelten Amplitude errechnet. Weist das Furnier eine Furnierstärke von beispielsweise 4 mm auf und ist eine Amplitude von 1,5 mm vorgesehen, ergibt sich eine Gesamtdicke der Wellfurnierlage von rund 7 mm. Wenigstens eine Lage Wellfurnier kann mit Holzlagen zu einem Holzbaumaterial, insbesondere Hohlkammerplatten, aus zueinander beabstandeten Holzlagen und wenigstens einem dazwischen eingesetzten Holzkern aus Wellfurnier zusammengesetzt werden. Je nach Einsatzerfordernis der zu fertigenden Holzbaumaterialien können die eingesetzten Furniere verschiedene Stärken und Radien aufweisen. Wesentlich ist, dass die Wellfurniere mit einem Schälmesser mit Wellschliff von einem um die eigene Achse rotierenden Stamm als Wellfurnier abgeschält werden, da nur in diesem Fall die gewünschte Maßhaltigkeit der Wellung der Wellfurniere und die erforderliche Druckfestigkeit des Holzbaumaterials gewährleistet werden kann. Es ergibt sich somit ein Faserverlauf, bei dem die Holzfasern parallel zur Wellfurniermittelebene ausgerichtet sind und verlaufen sowie in der Wellfurniermittelebne in Richtung der Wellung, also nicht in Richtung entlang der Wellenrücken ausgerichtet ist. Dadurch dass die Fasern in Richtung der Wellung ausgerichtet sind, ist eine sehr hohe Maßhaltigkeit der Wellen auch beim Trocknen gewährleistet, was wiederum zur Folge hat, dass das daraus gefertigte Hohlkammerelement eine hohe Maßhaltigkeit und auch eine verbesserte Festigkeit aufweist.

Zur Schaffung von Holzbaumaterial, insbesondere Hohlkammerplatten, beispielsweise Holzbaumaterialien von zwei- oder dreidimensional verformten Platten, von Zylindermaterial od. dgl. kann es von Vorteil sein, dass das Furnier zur Formsperrholzerzeugung in getrocknetem, nicht feuchtem Zustand in Abhängigkeit der zu fertigenden Geometrie in die gewünschte Form gebracht und anschließend in der vorgegebenen Form formstabilisiert, beispielsweise der Leim ausgehärtet, wird. Der Plattenbiegung sind somit die Furnierwellen quasi als Oberwellen überlagert. Aufgrund der Ausrichtung der Holzfasern im Wellfurnier ist dabei gewährleistet, dass das Furnier bei sachgemäßer Handhabung beim Pressen nicht zerbricht oder zerstört wird. Die Wellung verläuft dann nach dem formstabilisieren in der gewünschten Richtung, also entweder in einer Ebene oder einer gewollten Geometrie folgend bzw. einer Kreisbahn folgend od. dgl..

Zur Schaffung höher fester Holzbaumaterialien, insbesondere Hohlkammerplatten, Hohlkammerprofile od. dgl., ist der Holzkern aus zwei oder mehreren Lagen Wellfurnier zusammengesetzt werden, wobei die Wellen benachbarter Lagen unterschiedlich ausgerichtet werden, beispielsweise um 30, 45 oder 90° versetzt sind. Damit kann die Biegefestigkeit des Holzbaumaterials in mehreren Richtungen verbessert werden. Ebenso können die Lagen des Holzkerns unterschiedliche Furnierstärken aufweisen, wie dies insbesondere zur Schaffung besonders lärmdämmenden Holzbaumaterials von Vorteil ist.

Mehrere Lagen Wellfurnier werden zu Platten verleimt, wonach von den Platten Holzkernelemente gesägt werden, die eine dem Abstand der Holzlagen entsprechende Breite aufweisen, wonach die Holzkernelemente zum Holzkern zusammengeschichtet werden. Damit wird ein Holzbaumaterial geschaffen, bei dem die Faserrichtung des Kernmaterials senkrecht zu den Holzlagen ausgerichtet ist, womit höher druckbelastbares Holzbaumaterial, insbesondere Platten, geschaffen werden können.

Die wenigstens eine Lage Wellfurnier wird mit den Holzlagen zum Holzbaumaterial verleimt, wobei insbesondere formaldehydfreier bzw. formaldehydarmer Leim verwendet werden soll. Durch die Verbindung lediglich an den Wellenspitzen ist eine 50%ige Leimeinsparung gegeben. Damit kann das Holzbaumaterial problemlos thermisch entsorgt bzw. nach einem Schreddern ebenfalls kompostiert werden.

Durch die Verwendung der Wellfurniere wird bei der Schaffung von Holzbaumaterialien rund 30 % Holz und damit Gewicht eingespart. Somit kann die Ressource Holz um 30 % geschont werden. Bei der Produktion fallen auch praktisch keine erheblichen Mengen an Sägespänen an, sodass der Verlust an Holz während der Produktion erheblich reduziert werden kann. Die gefertigten Holzbaumaterialien können beispielsweise als Arbeits-, Bau- und Möbelplatten in diversesten Ausführungen eingesetzt werden. Die Verleimung der Wellfurniere zu zwei oder mehreren Schichten, je nach erforderlicher Stärke, erfolgt mit dem benötigten Pressdruck. Damit wird die gewünschte Genauigkeit und Formhaltigkeit der Holzbaumaterialien gewährleistet. Die nach dem erfindungsgemäßen Verfahren gefertigten Holzbaumaterialien können wie herkömmliche Plattenware bzw. Holzwerkstoffe in gewünschter Weise zugeschnitten und gegebenenfalls mit Umleimern versehen werden, um die Holzplatten bzw. das Holzbaumaterial stirnseitig sauber abzuschließen. Ein wesentlicher Vorteil ist, dass Schrauben von praktisch jeder Richtung in die erfindungsgemäßen Hohlkammerplatten bzw. in das erfindungsgemäße Holzbaumaterial eingedreht werden können und dabei stets sehr gut verankert sind. Ein Einschrauben von Schrauben durch das Hohlkammerblatt ist somit ebenfalls möglich, wie ein Einschrauben in die Stirnseite des Holzbaumaterials.

Erfindungsgemäße Wellfurniere eignen sich zudem für eine großindustrielle Fertigung und brauchen für die Radienstabilisierung, also zur Schaffung einer erforderlichen Festigkeit, keine Behandlung mit Harzen oder ähnlichen Materialien, die einen weiteren Fertigungsaufwand und eine Kontaminierung des Holzes mit unerwünschten Materialien zu Folge haben würde. Die erfindungsgemäße Ausgestaltung des Wellfurniers hat den Vorteil, dass die Holzfasern nur zum Teil durchtrennt werden und die Holzstruktur von den nicht von der Welle durchbrochenen, nach wie vor durchgehenden, Fasern sauber und definiert zusammengehalten wird. Zudem hat sich gezeigt, dass derartig gefertigtes Wellfurnier nur einem besonders geringen Verzug unterliegt und gute mechanische Eigenschaften aufweist. Die dabei eingesetzten Messerradien ergeben sich aus der Stärke der abzuschneidenden Furniere und der Holzart. Furnierstärke und Messerradien des Wellenschliffes müssen somit aufeinander abgestimmt werden. Ebenso sind das Schneidmesser und das Gegenmesser auch bei verschiedenen Holzarten unterschiedlich an den abzuschälenden Stamm anzustellen, um ein Zerstören des Wellfurniers während des Schälvorganges zu vermeiden.

Ein erfindungsgemäßes Holzbaumaterial, insbesondere Hohlkammerplatten, aus zueinander beabstandeten Holzlagen und einem dazwischen eingesetzten Holzkern aus Wellfurnier, wobei der Holzkern von wenigstens einer Lage Wellfurnier gebildet ist, dessen Holzfasern parallel zur Wellfurniermittelebene ausgerichtet sind, zeichnet sich dadurch aus, dass das Wellfurnier mit einem Schälmesser mit Wellenschliff und mit einem Gegendruckmesser mit Wellenschliff von einem um die eigene Achse rotierenden Stamm als Wellfurnier abgeschält ist, wobei die Amplitude der Wellfurnierwelle kleiner als die halbe Furnierstärke ist, dass der Holzkern mehrere Lagen Wellfurnier umfasst, wobei die Wellen benachbarter Lagen unterschiedlich ausgerichtet sind und der Holzkern aus Holzkernelementen besteht, die die eine dem Abstand der Holzlagen entsprechende Breite aufweisen und von Platten aus mehreren Lagen Wellfurnier gesägt sind, und der Holzkern, der mit den Holzlagen zum Holzbaumaterial zusammengesetzt ist. Zudem verlaufen die Holzfasern in Wellrichtung, was sich dadurch ergibt, dass das Furnier von einem rotierenden Holzstamm abgeschält wird.

Je nach erforderlicher Dicke des zu fertigenden Holzbauelements und nach erforderlicher Festigkeit kann der Holzkern zwei oder mehr Lagen Wellfurnier umfassen, wobei die Wellen benachbarter Lagen vorzugsweise unterschiedlich ausgerichtet sind und gegebenenfalls unterschiedliche Furnierstärke aufweisen.

In der Zeichnung ist die Erfindung an einem Ausführungsbeispiel schematisch dargestellt. Es zeigen
- Fig. 1: eine Wellfurnierbahn im Querschnitt,
- Fig. 2: ein Holzbauelement im Querschnitt,

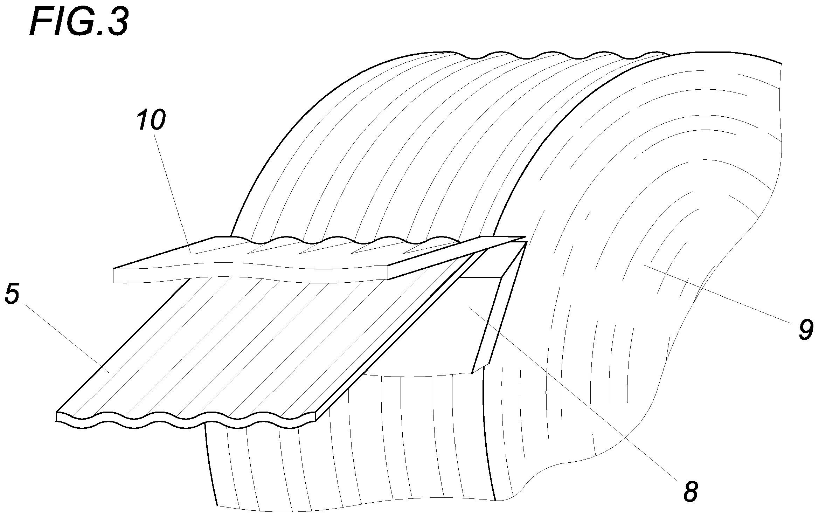

- Fig. 3: eine schematische Ansicht auf den Abschälvorgang des Wellfurniers von einem rotierenden Stamm,
- Fig. 4: eine Seitenansicht auf den Abschälvorgang des Wellfurniers von einem rotierenden Stamm und
- Fig. 5: die Messer aus Fig. 4 im Schnitt nach der Linie VI-VI.

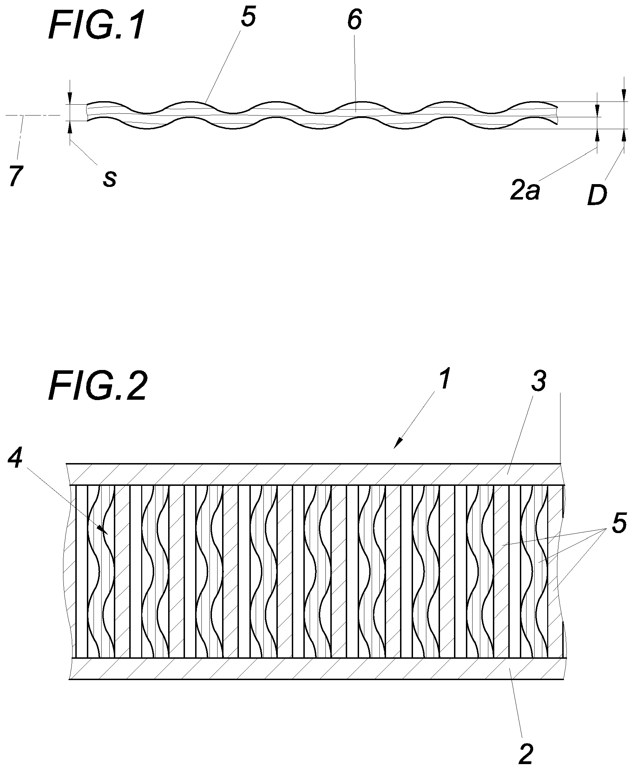

Ein erfindungsgemäßes Holzbaumaterial 1 (insbesondere wie in Fig. 2 dargestellte Hohlkammerplatte) besteht aus zueinander beabstandeten Holzlagen 2, 3, insbesondere Holzplatten, Sperrholzplatten, Spanplatten od. dgl.. Dazwischen ist ein Holzkern 4 aus Wellfurnier 5 eingesetzt. Der Holzkern 4 ist dabei von in einer Lage Wellfurnier 5 gebildet, dessen Holzfasern 6 parallel zur Wellfurniermittelebene 7 ausgerichtet sind. Die Amplitude a der Wellfurnierwelle ist dabei kleiner als die halbe Furnierstärke s, die Gesamtdicke der Wellfurnierlage errechnet sich dann aus der Summe der Furnierstärke plus die doppelte Amplitude a.

Der Holzkern 4 weist gemäß dem Ausführungsbeispiel nach Fig. 2 mehrere Lagen Wellfurnier 5 auf, wobei die Wellen benachbarter Lagen unterschiedlich ausgerichtet sind. Im dargestellten Ausführungsbeispiel sind die benachbarten Lagen um 90° hinsichtlich der Wellung versetzt. Ein Versatz um 45° oder eine beliebige Gradanzahl ist allerdings auch möglich.

Fig. 2 stehen die Wellfurniermittelebenen 7 senkrecht auf die Holzlagen 2, 3. Zur Fertigung des Holz in der Fig. 2 dargestellten Holzbaumaterials werden mehrere Lagen Wellfurnier 5 zunächst zu Platten verleimt, wonach von diesen Platten Holzkernelemente gesägt werden, die eine dem Abstand der Holzlagen 2, 3 entsprechende Breite aufweisen. In weiterer Folge werden die Holzkernelemente zum Holzkern 4 zusammengeschichtet und mit den Holzlagen 2, 3 zum Holzbaumaterial der gewünschten Stärke zusammensetzt, insbesondere gepresst.

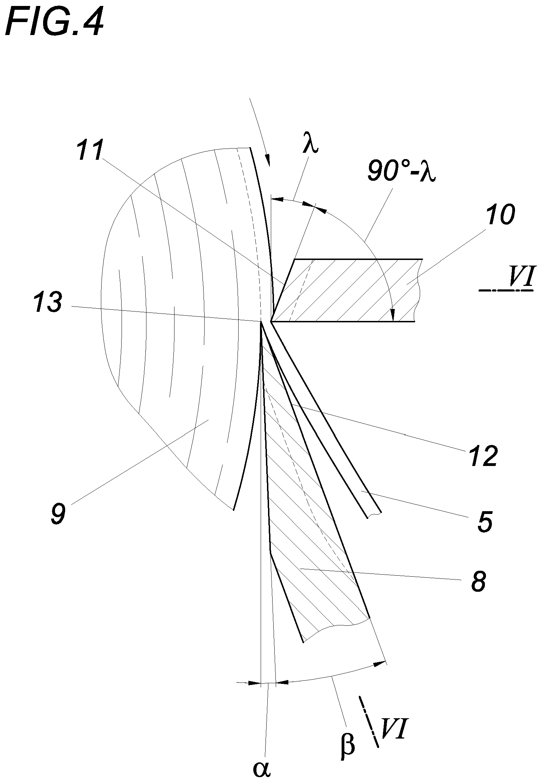

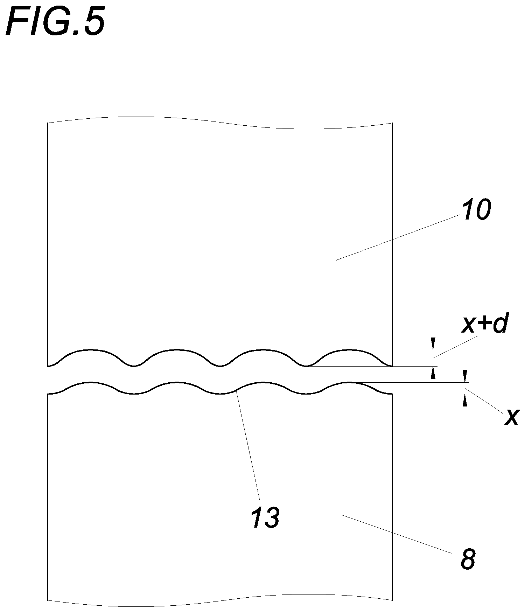

In den Fig. 4 und 5 ist angedeutet, dass das Furnier mit einem Schälmesser 8 mit Wellenschliff und mit einem Gegendruckmesser 10 mit Wellenschliff von einem um die eigene Achse rotierenden Stamm 9 als Wellfurnier 5 abgeschält wird.

Das Abschneiden des Wellfurniers 5 von dem rotierenden Stamm 9 erfolgt mit einem Schälmesser 8 mit Wellenschliff und mit einem Gegendruckmesser 10 mit ebenfalls einem Wellenschliff, wobei die Wellenschliffe von Schälmesser 8 und Gegendruckmesser 10 hinsichtlich der Wellenlänge übereinstimmen. Wellentäler und -spitzen der beiden Messer sind zueinander auf Lücke versetzt, sodass die Wellenspitze des einen Messers über einem Wellental des anderen Messers liegt. Die Messer sind dabei derart geschliffen, dass das Furnier bereits in der gewünschten gewellten Form, hinsichtlich Wellenlänge, Amplitude und Furnierdicke, vom Stamm abgeschnitten wird.

Das Gegendruckmesser 10 ist um 180° gedreht an den Stamm angestellt, drückt also mit seiner Hauptfreifläche 11 gegen den Stamm und gleitet die Stammoberfläche zur Begrenzung der Schnitttiefe des Schälmessers entlang, ohne Holz vom Stamm abzuschneiden. Beim Schälmesser 8 ist das Wellprofil in die Spanfläche 12 eingearbeitet und bestimmt somit die entsprechend gewellte Hauptschneide 13. Beim Gegendruckmesser 10 ist das Wellprofil in die Hauptfreifläche 11 eingearbeitet. Der Spitze-Tal-Wert x+d der Wellung des Gegendruckmessers 10 ist dabei um 0,3 bis 0,7mm, insbesondere um 0,5mm um größer zu wählen, als der Spitze-Tal-Wert x der Wellung des Schälmessers 8. Damit lässt sich die erforderliche Furnierdickenkonstanz über den Furnierquerschnitt erzielen und lassen sich Mikrorisse im Furnier vermeiden.

Der Freiwinkel α des Schälmessers 8 liegt im Bereich zwischen 2-3° und der Schneidwinkel β zwischen 16 bis 20°. Der Spanwinkel λ des Gegendruckmessers 10 liegt zwischen 17 und 21°.

## Patentansprüche

1. Verfahren zum Herstellen eines Holzbaumaterials (1), insbesondere von Hohlkammerplatten, aus zueinander beabstandeten Holzlagen (2, 3) und einem dazwischen eingesetzten Holzkern (4) aus Wellfurnier (5), wobei das Wellfurnier (5) mit einem Schälmesser (8) mit Wellenschliff und mit einem Gegendruckmesser (10) mit Wellenschliff von einem um die eigene Achse rotierenden Stamm (9) als Wellfurnier (5) abgeschält wird, **dadurch gekennzeichnet, dass** die Amplitude (a) der Wellfurnierwelle kleiner als die halbe Furnierstärke (s) ist, und dass das Wellfurnier (5) in weiterer Folge in der gewellten Form getrocknet wird, dass mehrere Lagen Wellfurnier (5) zu Platten verleimt werden, wobei die Wellen benachbarter Lagen unterschiedlich ausgerichtet werden, wonach von den Platten Holzkernelemente gesägt werden, die eine dem Abstand der Holzlagen (2, 3) entsprechende Breite aufweisen, wonach die Holzkernelemente zum Holzkern (4) zusammengeschichtet und mit den Holzlagen (2, 3) zum Holzbaumaterial (1) zusammengesetzt werden.

2. Verfahren nach Anspruch 1, **dadurch gekennzeichnet, dass** das Wellfurnier (5) zur Formsperrholzerzeugung in Abhängigkeit der zu fertigenden Geometrie in die gewünschte Form gebracht und anschließend in der vorgegebenen Form formstabilisiert wird.

3. Verfahren nach Anspruch 1 oder 2, **dadurch gekennzeichnet, dass** die wenigstens eine Lage Wellfurnier (5) mit den Holzlagen (2, 3) zum Holzbaumaterial (4) verleimt wird.

4. Nach einem Verfahren gemäß Anspruch 1 hergestelltes Holzbaumaterial (1), insbesondere Hohlkammerplatten, aus zueinander beabstandeten Holzlagen (2, 3) und einem dazwischen eingesetzten Holzkern (4) aus Wellfurnier (5), dessen Holzfasern (6) parallel zur Wellfurniermittelebene (7) ausgerichtet sind, **dadurch gekennzeichnet, dass** das Wellfurnier (5) mit einem Schälmesser (8) mit Wellenschliff und mit einem Gegendruckmesser (10) mit Wellenschliff von einem um die eigene Achse rotierenden Stamm (9) als Wellfurnier (5) abgeschält ist, wobei die Amplitude (a) der Wellfurnierwelle kleiner als die halbe Furnierstärke (s) ist, dass der Holzkern (4) mehrere Lagen Wellfurnier (5) umfasst, wobei die Wellen benachbarter Lagen unterschiedlich ausgerichtet sind und der Holzkern (4) aus Holzkernelementen besteht, die die eine dem Abstand der Holzlagen (2, 3) entsprechende Breite aufweisen und von Platten aus mehreren Lagen Wellfurnier (5) gesägt sind, und der Holzkern (4), der mit den Holzlagen (2, 3) zum Holzbaumaterial (1) zusammengesetzt ist.

5. Holzbaumaterial nach Anspruch 4, **dadurch gekennzeichnet, dass** der Holzkern (4) zwei oder mehrere Wellfurnierlagen unterschiedlicher Furnierstärke umfasst.

## Claims

1. Method for producing a wood construction material (1), in particular twin-wall sheets, consisting of mutually spaced apart wood layers (2, 3) and a wood core (4) of corrugated veneer (5) inserted therebetween, wherein the corrugated veneer (5) is peeled, as a corrugated veneer (5), by means of a serrated peeling blade (8) and a serrated counter-pressure blade (10) from a trunk (9) rotating about its own axis, **characterised in that** the amplitude (a) of the corrugated veneer corrugation is less than half the veneer thickness (s), and **in that** the corrugated veneer (5) is dried in the further sequence in the corrugated shape, **in that** a plurality of layers of corrugated veneer (5) are glued to form sheets, wherein the corrugations of adjacent layers are oriented differently, after which wood core elements are sawn from the sheets, said wood core elements having a width corresponding to the spacing between the wood layers (2, 3), after which the wood core elements are laminated together to form the wood core (4) and are assembled with the wood layers (2, 3) to form the wood construction material (1).

2. Method as claimed in claim 1, **characterised in that** the corrugated veneer (5) is made into the desired shape for producing form plywood in dependence upon the geometry to be produced and subsequently is rendered dimensionally stable in the specified shape.

3. Method as claimed in claim 1 or 2, **characterised in that** the at least one layer of corrugated veneer (5) is glued with the wood layers (2, 3) to form the wood construction material (4).

4. Wood construction material (1) produced according to a method as claimed in claim 1, in particular twin-wall sheets, consisting of mutually spaced apart wood layers (2, 3) and a wood core (4) of corrugated veneer (5) inserted therebetween, the wood fibres (6) of which are oriented in parallel with the corrugated veneer centre plane (7), **characterised in that** the corrugated veneer (5) is peeled, as a corrugated veneer (5), by means of a serrated peeling blade (8) and a serrated counter-pressure blade (10) from a trunk (9) rotating about its own axis, wherein the amplitude (a) of the corrugated veneer corrugation is less than half the veneer thickness (s), **in that** the wood core (4) comprises a plurality of layers of corrugated veneer (5), wherein the corrugations of adjacent layers are oriented differently and the wood core (4) consists of wood core elements which have a width corresponding to the spacing between the wood layers (2, 3) and are sawn from the sheets of a plurality of layers of corrugated veneer (5), and the wood core (4) is assembled with the wood layers (2, 3) to form the wood construction material (1).

5. Wood construction material as claimed in claim 4, **characterised in that** the wood core (4) comprises two or a plurality of corrugated veneer layers with a different veneer thickness.

## Revendications

1. Procédé de fabrication d'un matériau de construction en bois (1), en particulier de plaques alvéolaires, à partir de couches de bois (2, 3) espacées les unes par rapport aux autres et d'un noyau en bois (4), intercalé entre celles-ci, en contreplaqué ondulé (5), le contreplaqué ondulé (5) étant pelé avec un couteau (8) à bord dentelé et avec un couteau de contre-pression (10) à bord dentelé, ceci à partir d'un tronc (9) tournant autour de son propre axe, en tant que contreplaqué ondulé (5), **caractérisé en ce que** l'amplitude (a) de l'ondulation du contreplaqué ondulé est plus petite que la demi épaisseur de placage (s) et **en ce que** le contreplaqué ondulé (5) est ensuite séché de façon à obtenir une forme ondulée, **en ce que** plusieurs couches de contreplaqué ondulé (5) sont collées en plaques, les ondulations des couches adjacentes étant orientées différemment, à la suite de quoi, des éléments de noyau en bois sont sciés des plaques, qui présentent une largeur correspondant à l'espacement des couches de bois (2, 3), à la suite de quoi, les éléments de noyau en bois sont disposés en couches pour former le noyau en bois (4) et sont combinés avec les couches de bois (2, 3) pour constituer le matériau de construction en bois (1).

2. Procédé selon la revendication 1, **caractérisé en ce que** le contreplaqué ondulé (5) est mis à la forme voulue pour la production de contreplaqué moulé en fonction de la géométrie à réaliser puis est stabilisé dimensionnellement dans la forme prédéfinie.

3. Procédé selon la revendication 1 ou 2, **caractérisé en ce qu'**au moins une des couches de contreplaqué ondulé (5) est collée avec des couches de bois (2, 3) pour former le matériau de construction en bois (4).

4. Matériau de construction en bois (1) fabriqué selon un procédé selon la revendication 1, en particulier de plaques alvéolaires, à partir de couches de bois (2, 3) espacées les unes par rapport aux autres et d'un noyau en bois (4), intercalé entre celles-ci, en contreplaqué ondulé (5), dont les fibres de bois (6) sont orientées parallèlement au plan médian du contreplaqué ondulé (7), **caractérisé en ce que** le contreplaqué ondulé (5) est pelé avec un couteau (8) à bord dentelé et avec un couteau de contre-pression (10) à bord dentelé, ceci à partir d'un tronc (9) tournant autour de son propre axe, en tant que contreplaqué ondulé (5), l'amplitude (a) de l'ondulation du contreplaqué ondulé étant plus petite que la demi-épaisseur de placage (s), **en ce que** le noyau en bois (4) comprend plusieurs couches de contreplaqué ondulé (5), les ondulations des couches adjacentes étant orientées différemment et le noyau en bois (4) étant composé d'éléments de noyau en bois, qui comportent une largeur correspondant à l'espacement des couches de bois (2, 3), et sont sciés des plaques, en plusieurs couches de contreplaqué ondulé (5), et le noyau en bois (4) qui est combiné avec les couches de bois (2, 3) pour constituer le matériau de construction en bois (1)(*).

5. Matériau de construction en bois selon la revendication 4, **caractérisé en ce que** le noyau en bois (4) comprend deux ou plusieurs couches de contreplaqué ondulé de différentes épaisseurs de placage.
